(19) Europäisches Patentamt
European Patent Office
Office européen des brevets

(11) **EP 2 485 867 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **10745552.9**

(22) Anmeldetag: **14.08.2010**

(51) Int Cl.:
**B24B 13/005** (2006.01)

(86) Internationale Anmeldenummer:
**PCT/EP2010/005006**

(87) Internationale Veröffentlichungsnummer:
**WO 2011/042091 (14.04.2011 Gazette 2011/15)**

(54) **VORRICHTUNG UND VERFAHREN ZUM ABBLOCKEN VON OPTISCHEN WERKSTÜCKEN, INSBESONDERE BRILLENGLÄSERN**

DEVICE AND METHOD FOR DEBLOCKING OPTICAL WORKPIECES, PARTICULARLY OPHTHALMIC LENSES

DISPOSITIF ET PROCEDE POUR LE DEBLOCAGE DES PIECES OPTIQUES, EN PARTICULIER LENTILLES OPHTHALMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **07.10.2009 DE 102009048590**

(43) Veröffentlichungstag der Anmeldung:
**15.08.2012 Patentblatt 2012/33**

(73) Patentinhaber: **Satisloh AG**
**6340 Baar (CH)**

(72) Erfinder:
• **PAVEL, Gregor**
  **35625 Hüttenberg (DE)**

• **KRAFT, Thorsten**
  **35585 Wetzlar (DE)**
• **SCHÄFER, Holger**
  **35789 Weilmünster (DE)**

(74) Vertreter: **Oppermann, Mark**
**Oppermann & Oppermann**
**Patentanwälte**
**Am Wiesengrund 35**
**63075 Offenbach (DE)**

(56) Entgegenhaltungen:
**EP-A1- 2 042 265       WO-A1-2009/102908**
**US-A1- 2008 282 855**

**Beschreibung**

TECHNISCHES GEBIET

Die vorliegende Erfindung bezieht sich allgemein auf eine Vorrichtung zum Abblocken von optischen Werkstücken gemäß dem Oberbegriff des Patentanspruchs 1 sowie ein solches Verfahren.

Als "Aufblocken" oder kurz "Blocken" wird in der Optikfertigung allgemein der Vorgang bezeichnet, bei dem ein optisches Werkstück mittels eines geeigneten Materials (niedrig schmelzende Legierung - sogenanntes "Alloy" - oder Klebstoff) auf einem sogenannten "Blockstück" temporär befestigt wird, oder aber das Blockmaterial auf dem Werkstück aufgebracht wird, um selbst das Blockstück auszubilden, welches dann dazu dient, das Werkstück in der jeweiligen Bearbeitungsmaschine und/oder Beschichtungsanlage zu halten. Dementsprechend heißt in der Optikfertigung derjenige Vorgang "Abblocken", bei dem das optische Werkstück nach dessen Bearbeitung und/oder Beschichtung wieder vom Blockstück/Blockmaterial getrennt wird.

Insbesondere bezieht sich die Erfindung auf eine Vorrichtung und ein Verfahren zum Abblocken von Brillengläsern. Brillengläser werden in sogenannten "RX-Werkstätten" massenweise geblockt, bevor das jeweilige geblockte Brillenglas an seiner Rück- oder Frontfläche im Hinblick auf seine optische Wirkung und/oder am Rand zur Einpassung in ein zugeordnetes Brillengestell mit geometrisch bestimmter Schneide (Fräsen/Drehen) oder geometrisch unbestimmter Schneide (Schleifen/Polieren) spanend bearbeitet und/oder auf seiner Rück- oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet wird.

Wenn nachfolgend im Zusammenhang mit der vorliegenden Erfindung als bevorzugtem Anwendungsgebiet allgemein von "Brillengläsern" die Rede ist, sind darunter optische Linsen bzw. Linsenrohlinge (Blanks) für Brillen aus den gebräuchlichen Materialien, wie Polycarbonat, Mineralglas, CR 39, HI-Index, etc. und mit beliebiger (Vor)Form des Umfangsrandes der Linse bzw. des Linsenrohlings zu verstehen, die vor dem Blocken bereits an einer oder beiden optisch wirksamen Fläche(n) und/oder am Rand (vor)bearbeitet und/oder (vor)beschichtet sein können aber nicht müssen. Auch kann das Brillenglas auf seiner Fläche, an der es geblockt wird/ist, mit einer Folie, einem Lack od.dgl. versehen sein, um diese Fläche vor Verunreinigung und Beschädigung zu schützen und/oder die Haftungseigenschaften zwischen Brillenglas und Blockmaterial zu verbessern, ohne dass dies im Folgenden jeweils eigens erwähnt wird.

STAND DER TECHNIK

Im Stand der Technik fehlt es nicht an Vorschlägen, wie eine Vorrichtung zum automatisierten Abblocken von Brillengläsern ausgebildet werden kann, wobei ein Druckmittel wie Wasser verwendet wird, um das Brillenglas vom Blockstück durch Aufbringung hydraulischer Kräfte zu lösen, und zwar entweder von "innen" über einen Druckmittelkanal im Blockstück, der an der dem Brillenglas zugewandten Blockfläche des Blockstücks mündet (z.B. DE 10 2005 038 063 A1, Fig. 12; WO 03/018253 A1, Fig. 4), oder von "außen" mittels eines von einer Düse abgegebenen Hochdruck-Wasserstrahls, der auf einer Randstelle zwischen Blockstück und Brillenglas auftrifft (beispielsweise WO 2008/003805 A1, Fig. 1).

Ein Nachteil der "inneren" Aufbringung der hydraulischen Kräfte ist darin zu sehen, dass das Blockstück mit zur Blockfläche hin offenen Hohlräumen versehen ist, die einer wünschenswerten vollflächigen Abstützung des Brillenglases am Blockstück entgegenstehen. Zwar kann die Öffnung in der Blockfläche prinzipiell verkleinert werden, um eine annähernd vollflächige Abstützung zu erzielen. Dann aber lassen sich kaum die hydraulischen Kräfte aufbringen, die erforderlich sind, um das Brillenglas vom Blockstück zu trennen.

Abhilfe kann hier freilich der Einsatz eines kleinen Kolbens im (separaten) Blockstück schaffen, der die Blockfläche mit begrenzt, wie in der WO 03/018253 A1 (Fig. 14 bis 22) als Alternative vorgeschlagen. Über diesen Kolben werden beim Abblocken dann allerdings mechanische Kräfte auf einer relativ kleinen, zentralen Fläche am Brillenglas aufgebracht, die dazu führen können, dass das Brillenglas zerstört wird. Immerhin gilt es beim Ablösen Kräfte zu erzeugen, die höher sind als die Haftkräfte zwischen Brillenglas und Blockstück. Bei der vorbeschriebenen Kolbenlösung wirken die Ablösekräfte auf die Mitte des Brillenglases, während die Haftkräfte vornehmlich in einer Ringzone am Brillenglasrand wirken. Dies kann insbesondere im Falle von dünnen Brillengläsern zu verhältnismäßig starken Deformationen am und hohen Spannungen im abzublockenden Brillenglas führen, die letztendlich einen Bruch des Brillenglases hervorrufen können - einmal abgesehen von dem Aufwand, den es mit sich bringt, einen solchen Kolben im Blockstück vorzusehen.

Die vorbekannte "äußere" Lösung gemäß der den Oberbegriff des Patentanspruchs 1 bildenden WO 2008/003805 A1 ermöglicht zwar eine vollflächige Abstützung des Brillenglases am Blockstück und verringert darüber hinaus die Gefahr, dass das Brillenglas beim Abblocken beschädigt wird. Dieser Stand der Technik ist jedoch in anderer Hinsicht verbesserungsbedürftig.

Das dort offenbarte Abblockverfahren wurde speziell für das Abblocken von mit einem thermoplastischen Blockmaterial geblockten Brillengläsern entwickelt. Dabei wird ein Schmelzen des Blockmaterials zunächst durch Eintauchen des Verbunds aus Brillenglas, Blockmaterial und Blockstück in ein Bad mit heißem Wasser forciert. Sodann werden Blockstück und Blockmaterial sowie eine Schutzfolie auf dem Brillenglas mittels eines Hochdruck-Wasserstrahls vom Brillenglas abgelöst. Hierfür wird das Strahlwasser auf eine Temperatur zwischen 50°C und 65°C erhitzt, um das Blockmaterial weiter zu erweichen und schließlich infolge der Erwärmung zu verflüssigen. Der Hochdruck-Wasserstrahl fächert hier relativ breit auf und wird zudem um die Längsachse der Düse gedreht, um auch unter die Schutzfolie auf dem rotierenden Brillenglas zu gelangen und diese vom Brillenglas abzuheben.

Ein Nachteil dieses Stands der Technik wird insbesondere darin gesehen, dass - auch infolge des zwischengeschalteten Vorwärmschritts im heißen Wasserbad - das Abblocken eines Brillenglases relativ lange dauert, was einem effizienten Einsatz dieses Verfahrens in RX-Werkstätten entgegensteht.

AUFGABENSTELLUNG

Der Erfindung liegt die Aufgabe zugrunde, eine Vorrichtung zum Abblocken von optischen Werkstücken, insbesondere Brillengläsern zu schaffen, mittels der die optischen Werkstücke möglichst sicher, beschädigungsfrei und schnell abgeblockt werden können. Die Erfindungsaufgabe umfasst zudem die Bereitstellung eines entsprechenden Abblockverfahrens.

DARSTELLUNG DER ERFINDUNG

Diese Aufgabe wird durch die im Patentanspruch 1 bzw. 13 angegebenen Merkmale gelöst. Vorteilhafte oder zweckmäßige Weiterbildungen der Erfindung sind Gegenstand der Patentansprüche 2 bis 12 bzw. 14 bis 21.

Erfindungsgemäß ist bei einer Vorrichtung zum Abblocken von optischen Werkstücken, insbesondere Brillengläsern, die eine erste Bewegungseinrichtung zum Drehen eines auf einem Blockstück geblockten Werkstücks um eine Werkstück-Drehachse, eine Düsenbaugruppe mit einer Düse für die Abgabe eines Druckmittel-Hochdruckstrahls in einer Richtung im Wesentlichen quer zur Werkstück-Drehachse auf einen Randbereich zwischen Werkstück und Blockstück sowie eine zweite Bewegungseinrichtung zum Erzeugen einer Relativbewegung zwischen dem Werkstück und der Düse entlang der Werkstück-Drehachse umfasst, das Werkstück bezüglich der Düse oder umgekehrt die Düse bezüglich des Werkstücks mittels der zweiten Bewegungseinrichtung lagegeregelt (Y-Achse) entlang der Werkstück-Drehachse verschiebbar, so dass der Druckmittel-Hochdruckstrahl auf eine vorbestimmte Auftreffstelle im Randbereich zwischen Werkstück und Blockstück richtbar ist.

Verfahrensseitig sieht die Erfindung vor, das Abblocken von optischen Werkstücken, insbesondere Brillengläsern, unter Verwendung der erfindungsgemäßen Vorrichtung mit den folgenden Schritten durchzuführen:

(i) Einlegen eines auf einem Blockstück geblockten Werkstücks in die Vorrichtung, so dass das Blockstück von der ersten Bewegungseinrichtung um die Werkstück-Drehachse drehbar gehalten wird,

(ii) Berechnen einer Relativlage der Düse bezüglich des Blockstücks, bei der die Düse auf die vorbestimmte Auftreffstelle im Randbereich zwischen Werkstück und Blockstück zielt,

(iii) Einstellen (Y-Achse) der berechneten Relativlage von Düse und Blockstück mittels der zweiten Bewegungseinrichtung,

(iv) Einschalten eines Druckmittel-Hochdruckstrahls, der von der Düse in Richtung der vorbestimmten Auftreffstelle im Randbereich zwischen Werkstück und Blockstück abgegeben wird, um das Werkstück vom Blockstück zu trennen,

(v) Ausschalten des Druckmittel-Hochdruckstrahls nachdem sich das Werkstück vom Blockstück getrennt bzw. gelöst hat und

(vi) Entnehmen des abgeblockten Werkstücks aus der Vorrichtung.

Dadurch, dass der Druckmittel-Hochdruckstrahl anders als im gattungsbildenden Stand der Technik nicht mehr oder weniger zufällig auf die Trennstelle zwischen Blockstück und Blockmaterial oder die Trennstelle zwischen Blockmaterial und Werkstück trifft, sondern infolge der relativen (Höhen)Verstellbarkeit von Düse und Blockstück CNC-technisch gezielt auf die jeweilige Trennstelle gerichtet werden kann, ist es möglich, das Werkstück deutlich schneller abzublocken, was die erfindungsgemäße Vorrichtung / das erfindungsgemäße Verfahren insbesondere für den Einsatz in RX-Werkstätten prädestiniert. Hierbei kann einem schnellen Abblockvorgang weiter förderlich mit einem relativ hohen Druck des Druckmittels gearbeitet werden, ohne dass die Gefahr besteht, dass das Werkstück von dem Druckmittel-Hochdruckstrahl beschädigt wird, weil es durch die gezielt anfahrbare Relativstellung von Düse und Blockstück bzw. Werkstück vermeidbar ist, dass der Druckmittel-Hochdruckstrahl in kritischer Weise über das Werkstück streift. So lassen sich insbesondere mit Klebstoffen aufgeblockte Werkstücke schnell, sicher und beschädigungsfrei abblocken, ohne dass es vorgelagerter Ein- und/oder Erweichungsvorgänge und/oder temperierter Druckmittel für das Abblocken bedarf.

Für eine konkrete Umsetzung des obigen Abblockverfahrens in einem automatisierten Ablauf ist es bevorzugt, wenn die Schritte (ii) und (iii) das Berechnen bzw. Einstellen (Y-Achse) einer Höhenposition der Düse bezüglich eines - schon vom Blockvorgang her bekannten - Referenzpunkts am Blockstück umfassen, um mit der Düse auf die vorbestimmte Auftreffstelle im Randbereich zwischen Werkstück und Blockstück zu zielen. Ein gesondertes Vermessen des geblockten Werkstücks od.dgl. zur Ermittlung der mit dem Druckmittel-Hochdruckstrahl anzuzielenden Trennstellen ist somit entbehrlich.

Befindet sich zwischen dem Werkstück und dem Blockstück eine Schicht aus einem Blockmaterial, so kann die vorbestimmte Auftreffstelle des Druckmittel-Hochdruckstrahls grundsätzlich an der Trennstelle zwischen Werkstück und Blockmaterial liegen. Bevorzugt ist es allerdings, wenn die vorbestimmte Auftreffstelle des Druckmittel-Hochdruckstrahls im Grenzbereich zwischen Blockstück und Blockmaterial liegt, schon weil sich die Berechnung der Höhenposition der Düse bezüglich des Blockstücks mathematisch einfacher gestaltet als bezüglich des Werkstücks, welches auch "räumlich" auf dem Blockstück geblockt sein kann, z.B. mit prismatischer Verschiebung.

Vorzugsweise handelt es sich bei der ersten Bewegungseinrichtung um eine Motorspindel, die eine Spannzange zur drehwinkelorientierten Aufnahme des Blockstücks aufweist, wobei die Spannzange mittels der Motorspindel im Drehwinkel geregelt (B-Achse) um die Werkstück-Drehachse drehend antreibbar ist. Zum einen kann somit (zumindest) im obigen Schritt (iv) das Blockstück mittels der ersten Bewegungseinrichtung um die Werkstück-Drehachse gedreht werden, was den Abblockvorgang verglichen zu einem - grundsätzlich möglichen - Abblockvorgang mit drehfest gehaltenem Blockstück beschleunigt. Zum anderen ist es somit möglich, im obigen Schritt (iv) zusätzlich die Höhenposition der Düse bezüglich des Referenzpunkts am Blockstück in Abhängigkeit von der jeweiligen Winkelposition des Blockstücks zu berechnen und vermittels der zweiten Bewegungseinrichtung (Y-Achse) einzustellen bzw. nachzuführen, so dass der Druckmittel-Hochdruckstrahl nicht nur zu Beginn des eigentlichen Abblockens sondern stets im Grenzbereich zwischen Blockstück und Blockmaterial auftrifft - eine Maßnahme, welche die Präzision und die Geschwindigkeit des Abblockens weiter erhöht.

In zweckmäßiger und kostengünstiger Ausgestaltung der Abblockvorrichtung kann die zweite Bewegungseinrichtung einen Y-Schlitten aufweisen, der mittels eines Servomotors und eines Gewindetriebs lagegeregelt (Y-Achse) entlang der Werkstück-Drehachse verschiebbar ist und die erste Bewegungseinrichtung, d.h. die Motorspindel trägt.

Im weiteren Verfolg des Erfindungsgedankens kann eine dritte Bewegungseinrichtung vorgesehen sein, zum Erzeugen einer lagegeregelten (X-Achse) Relativbewegung zwischen dem Werkstück und der Düse in einer Richtung im Wesentlichen senkrecht zur Werkstück-Drehachse, wobei mittels der dritten Bewegungseinrichtung ein lichter Abstand zwischen der Düse und der vorbestimmten Auftreffstelle des Druckmittel-Hochdruckstrahls einstellbar ist. So kann der Abstand von Düse und Auftreffstelle im Hinblick auf ein möglichst gutes (d.h. schnelles und zuverlässiges) Abblockergebnis auf einfache Weise optimiert werden. Die dritte Bewegungseinrichtung kann - erneut in zweckmäßiger und kostengünstiger Ausgestaltung - einen X-Schlitten aufweisen, der mittels eines Servomotors und eines Gewindetriebs lagegeregelt (X-Achse) im Wesentlichen senkrecht zur Werkstück-Drehachse verschiebbar ist und die Düse trägt.

So können in einem automatisierten Ablauf des Abblockverfahrens die Schritte (ii) und (iii) ferner ein Berechnen bzw. ein mittels der dritten Bewegungseinrichtung bewirktes Einstellen (X-Achse) einer Radialposition der Düse bezüglich des Referenzpunkts am Blockstück umfassen, um die Düse von der vorbestimmten Auftreffstelle im Randbereich zwischen Werkstück und Blockstück in definierter Weise zu beabstanden.

Auch in diesem Fall ist es möglich, im obigen Schritt (iv) zudem die Radialposition der Düse bezüglich des Referenzpunkts am Blockstück in Abhängigkeit von der jeweiligen Winkelposition des sich drehenden Blockstücks zu berechnen und vermittels der dritten Bewegungseinrichtung (X-Achse) einzustellen bzw. nachzuführen, so dass der Druckmittel-Hochdruckstrahl nach Verlassen der Düse stets nach Zurücklegung einer im Wesentlichen konstanten Strecke (lichter Abstand) an der Auftreffstelle im Randbereich zwischen Werkstück und Blockstück auftrifft.

Von der Anmelderin durchgeführte Versuche mit einer handelsüblichen Flachstrahldüse, die einen Düsenöffnungsquerschnitt von ca. 0,45 mm und einen Strahlwinkel von etwa 25° aufwies, bei welchen Versuchen mit einem aus untemperiertem Leitungswasser als Druckmittel gebildeten Druckmittel-Hochdruckstrahl unter einem Wasserdruck zwischen 100 und 140 bar, vorzugsweise 120 bar, gearbeitet wurde, haben in diesem Zusammenhang ergeben, dass der lichte Abstand zwischen der Düse und der vorbestimmten Auftreffstelle des Druckmittel-Hochdruckstrahls zwischen 15 mm und 40 mm liegen sollte, vorzugsweise bei etwa 20 mm, um einen sicheren und schnellen Abblockvorgang zu erzielen. Ist der lichte Abstand hier zu klein, wird das Blockmaterial nur in der Mitte des aufgefächerten Hochdruckstrahls abgelöst; wird der lichte Abstand hingegen zu groß gewählt, erhöht dies die Abblockzeit erheblich.

In weiterer vorteilhafter Ausgestaltung der Abblockvorrichtung kann die Düse an einem Schwenklager der Düsenbaugruppe um eine Winkeleinstellachse schwenkbar gehalten sein, so dass ein Einstellwinkel der Düse bezogen auf eine Ebene senkrecht zur Werkstück-Drehachse justierbar ist. Die durchgeführten Versuche haben hier ergeben, dass der Einstellwinkel der Düse bezogen auf die Ebene senkrecht zur Werkstück-Drehachse zwischen 5° und 25° liegen sollte, vorzugsweise bei etwa 15°. Hierbei kann der Hochdruckstrahl entweder in Richtung des Blockstücks geneigt sein, was das Abblocken auch solcher Werkstücke ermöglicht, die einen kleineren Durchmesser aufweisen als das Blockstück, oder aber vom Blockstück weg geneigt sein, was beim Abblocken am Werkstück eine Kraftkomponente erzeugt, die vom Blockstück weg weist und insofern das Trennen von Werkstück und Blockstück begünstigt.

Es ist ferner bevorzugt, wenn die Abblockvorrichtung eine Saugeinrichtung mit einem Saugkopf aufweist, der dazu dient, das Werkstück beim Abblocken vom Blockstück an seiner vom Blockstück abgewandten, zweiten optisch wirksamen Fläche zu halten. Somit kann der Saugkopf der Saugeinrichtung das Werkstück wenigstens in den obigen Schritten (iv) und (v) halten, was die Gefahr einer Beschädigung des Werkstücks beim Abblocken weiter reduziert.

Ist darüber hinaus in weiterer vorteilhafter Ausgestaltung der Abblockvorrichtung der mit der Werkstück-Drehachse ausgefluchtete Saugkopf durch eine Kolben-Zylinder-Anordnung in Richtung der Werkstück-Drehachse bewegbar (Linearbewegung Y'), so kann im obigen Schritt (iv) mittels der Kolben-Zylinder-Anordnung über den beim Abblocken an der zweiten optisch wirksamen Fläche angesaugten Saugkopf schließlich noch eine vorbestimmte Zugkraft am Werkstück aufgebracht werden, die zweckmäßig nur geringfügig kleiner ist als die durch den Saugkopf am Werkstück bewirkte Haltekraft, was ebenfalls einem schnellen Abblockvorgang förderlich ist.

KURZE BESCHREIBUNG DER ZEICHNUNGEN

Im Folgenden wird die Erfindung anhand bevorzugter Ausführungsbeispiele unter Bezugnahme auf die beigefügten schematischen Zeichnungen näher erläutert, wobei gleiche oder entsprechende Baugruppen bzw. Teile mit den gleichen Bezugszeichen versehen sind und ferner zur Vereinfachung der Darstellung sowie der besseren Übersichtlichkeit halber auch Baugruppen und Teile weggelassen wurden, die für das Verständnis der Erfindung nicht erforderlich erscheinen (wie Bedieneinheit und Steuerung, Verkleidungsteile, Versorgungseinrichtungen, einschließlich Leitungen, Schläuche und Rohre für Strom, Druckluft und Vakuum, etc.). In den Zeichnungen zeigen:

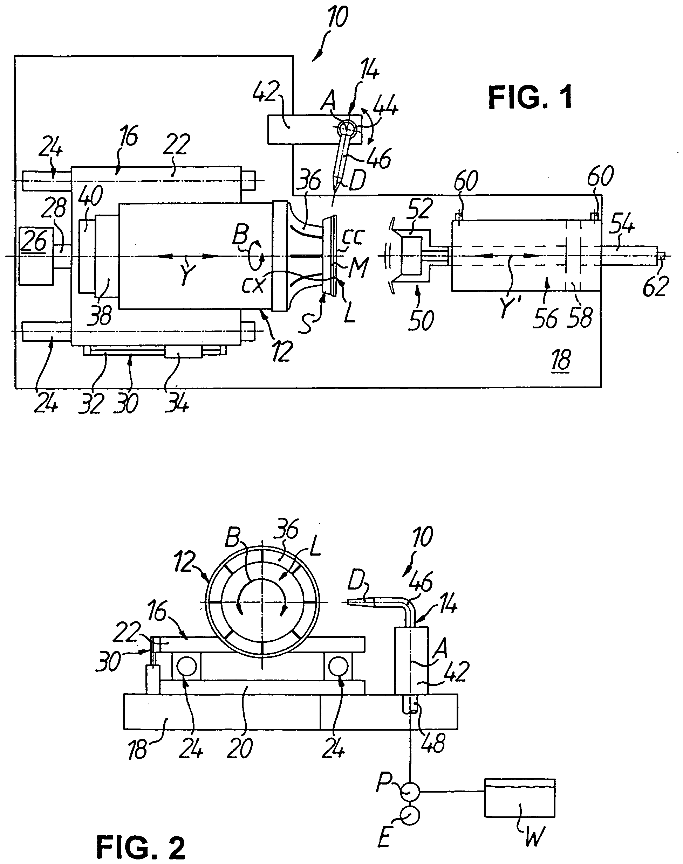

Fig. 1      eine Draufsicht auf eine Vorrichtung zum Abblocken von Brillengläsern als optischen Werkstücken nach einem ersten Ausführungsbeispiel der Erfindung, mit einer verschwenkbaren, ansonsten aber ortsfesten Düse zur Abgabe eines abblockenden Hochdruck-Wasserstrahls sowie einer winkellagegeregelten Drehachse B und einer lagegeregelten Linearachse Y für das Werkstück;

Fig. 2      eine Seitenansicht der Vorrichtung gemäß Fig. 1 von links in Fig. 1, die in der Zeichnungsebene um 90° im Uhrzeigersinn gedreht wurde;

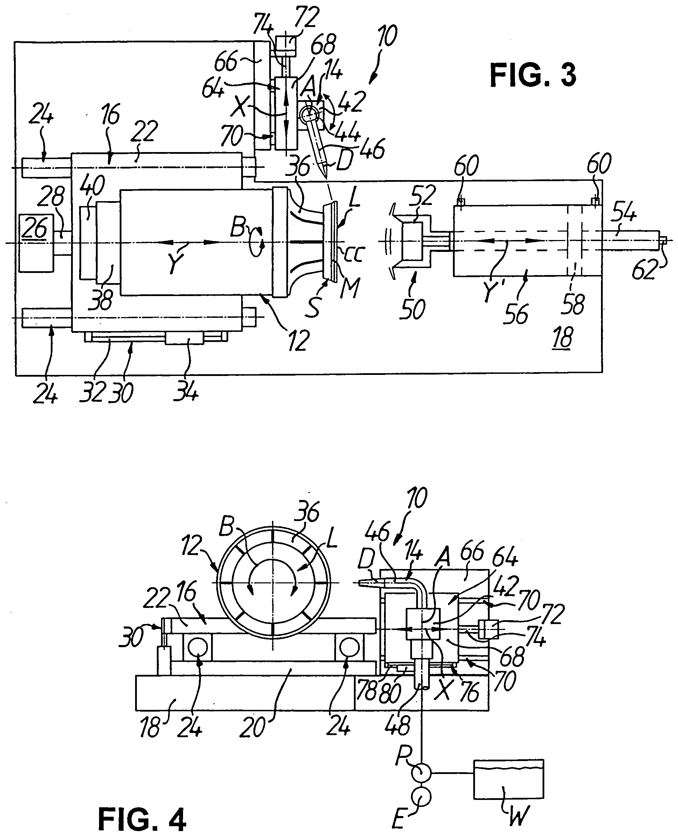

Fig. 3      eine Draufsicht auf eine Vorrichtung zum Abblocken von Brillengläsern als optischen Werkstücken nach einem zweiten Ausführungsbeispiel der Erfindung, bei dem gegenüber dem ersten Ausführungsbeispiel zusätzlich noch eine lagegeregelte Linearachse X für die Düse zur Abgabe des abblockenden Hochdruck-Wasserstrahls vorgesehen ist;

Fig. 4      eine Seitenansicht der Vorrichtung gemäß Fig. 3 von links in Fig. 3, die in der Zeichnungsebene um 90° im Uhrzeigersinn gedreht wurde; und

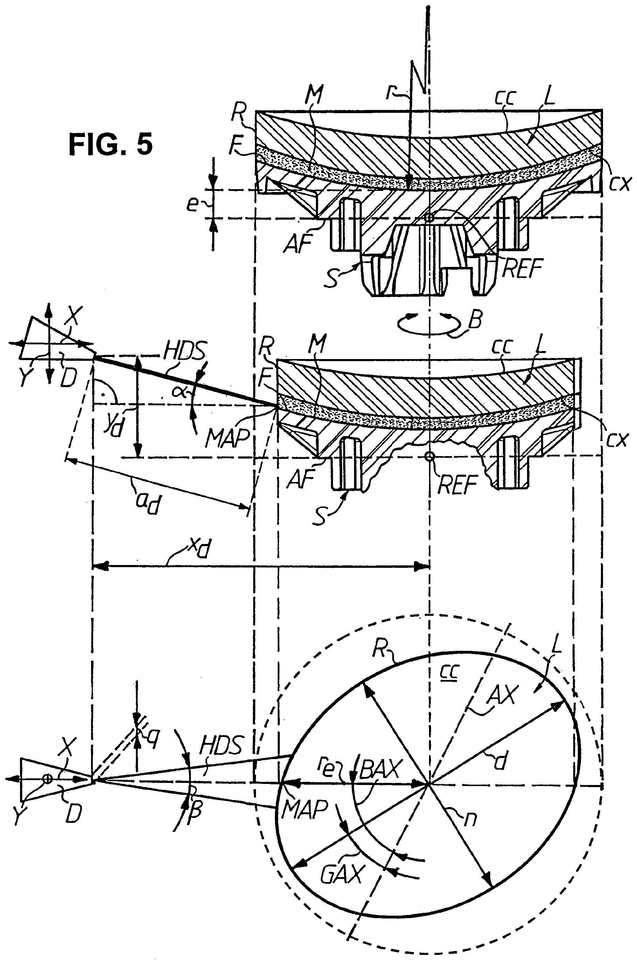

Fig. 5      eine Skizze zur Veranschaulichung der wesentlichen Geometriedaten an der Düse zur Abgabe des abblockenden Hochdruck-Wasserstrahls einerseits und an dem Verbund aus Brillenglas, Blockmaterial und Blockstück andererseits sowie der geometrischen Relativbeziehung dieser Teile zueinander, auch im Vergleich zwischen einem Zustand direkt nach dem Aufblocken (Schnittansicht oben) und einem Zustand beim Abblocken (Schnittansicht in der Mitte und zugehörige Draufsicht unten).

DETAILLIERTE BESCHREIBUNG DER AUSFÜHRUNGSBEISPIELE

Im ersten Ausführungsbeispiel gemäß den Fig. 1 und 2 ist eine Vorrichtung zum Abblocken von Brillengläsern L als optischen Werkstücken mit 10 beziffert. Die Abblockvorrichtung 10 umfasst allgemein eine erste Bewegungseinrichtung 12 zum Drehen des auf einem Blockstück S geblockten Brillenglases L um eine Werkstück-Drehachse B, eine Düsenbaugruppe 14 mit einer Düse D für die Abgabe eines Hochdruck-Wasserstrahls (Druckmittel-Hochdruckstrahl HDS in Fig. 5) in einer Richtung im Wesentlichen quer zur Werkstück-Drehachse B auf einen Randbereich zwischen Brillenglas L und Blockstück S sowie eine zweite Bewegungseinrichtung 16 zum Erzeugen einer Relativbewegung zwischen dem Brillenglas L und der Düse D entlang der Werkstück-Drehachse B. Wesentlich ist, dass das Brillenglas L bezüglich der Düse D - oder, als nicht dargestellte Alternative hierzu, umgekehrt die Düse bezüglich des Brillenglases - mittels der zweiten Bewegungseinrichtung 16 lagegeregelt (Y-Achse) entlang der Werkstück-Drehachse B verschiebbar ist, so dass der Hochdruck-Wasserstrahl HDS auf eine vorbestimmte Auftreffstelle MAP (vgl. wiederum Fig. 5) im Randbereich zwischen Brillenglas L und Blockstück S richtbar ist, wie nachfolgend noch näher erläutert werden wird.

Die Abblockvorrichtung 10 ist insgesamt auf einer Grundplatte 18 aufgebaut. Auf der Grundplatte 18 ist zunächst eine Konsole 20 der zweiten Bewegungseinrichtung 16 befestigt. Ein Y-Schlitten 22 (Werkstückschlitten) der zweiten Bewegungseinrichtung 16 ist an der Konsole 20 über zwei parallel angeordnete, in Querrichtung zur Werkstück-Drehachse B voneinander beabstandete Linearführungen 24 längsverschieblich gehalten. Jede Linearführung 24 besteht in an sich bekannter Weise aus einer Führungsschiene oder -stange an dem einen Teil (Konsole 20 oder Y-Schlitten 22) und zugeordneten Führungsschuhen an dem anderen Teil. Für die Erzeugung der Linearbewegung entlang der Werkstück-Drehachse B, d.h. in Richtung Y weist die zweite Bewegungseinrichtung 16 einen Servomotor 26 auf, der über einen Gewindetrieb 28 mit dem Y-Schlitten 22 wirkverbunden ist. Seitlich vom Y-Schlitten 22 (in Fig. 2 links) ist ein lineares Wegmesssystem 30 mit einem am Y-Schlitten 22 befestigten Linearmaßstab 32 und einem diesem zugeordneten, an der Grundplatte 18 oder der Konsole 20 angebrachten Lesekopf 34 angeordnet. Im Ergebnis ist der Y-Schlitten 22 relativ zur Konsole 20 linear beweg- bzw. verstellbar, und zwar CNC-lagegeregelt in beiden Richtungen der Y-Achse, unter Zuhilfenahme der vom Wegmesssystem 30 ermittelten Positionsdaten für den Y-Schlitten 22.

Wie insbesondere die Fig. 2 zeigt, trägt der Y-Schlitten 22 die erste Bewegungseinrichtung 12, bei der es sich im dargestellten Ausführungsbeispiel um eine wälzgelagerte Motorspindel handelt, die eine Spannzange 36 zur drehwinkelorientierten Aufnahme des Blockstücks S aufweist. Mittels der Motorspindel 12 ist die Spannzange 36, die wie in der DE 10 2008 051 833 A1 derselben Anmelderin beschrieben ausgebildet sein kann, im Drehwinkel BAX (vgl. Fig. 5) CNC-geregelt um die Werkstück-Drehachse B drehend antreibbar. Zur Ermittlung der hierfür benötigen Winkelpositionsdaten ist an der Motorspindel 12 ein Hohlwellen-Drehgeber 38 vorgesehen. Mit 40 ist hier schließlich ein Entspannzylinder beziffert, mittels dessen die federvorgespannte Spannzange 36 betätigt, d.h. geöffnet werden kann, um das Blockstück S zu spannen bzw. wieder freizugeben.

In Fig. 1 oberhalb der Spannzange 36 ist die Düsenbaugruppe 14 über einen Halter 42 an der Grundplatte 18 gehalten. Am Halter 42 ist ein Schwenklager 44 der Düsenbaugruppe 14 befestigt, welches dazu dient, die Düse D um eine Winkeleinstellachse A schwenkbar zu halten, so dass ein Einstellwinkel α der Düse D (vgl. wiederum Fig. 5) bezogen auf eine Ebene senkrecht zur Werkstück-Drehachse B justierbar ist. Genauer gesagt ist die Düse D, die in der Seitenansicht gemäß Fig. 2 gesehen auf die Werkstück-Drehachse B zielt, an einem L-förmig gebogenen Rohr 46 befestigt, welches seinerseits das Schwenklager 44 durchgreift und in diesem in der eingestellten Winkelstellung festgesetzt werden kann, z.B. mittels einer Klemmschraube od. dgl. (nicht dargestellt). An das Rohr 46 ist ein Hochdruckschlauch 48 angeschlossen, der mit einer Hochdruckpumpe P hydraulisch verbunden ist. Die Hochdruckpumpe P wird von einem Elektromotor E angetrieben, um das Druckmittel, hier untemperiertes Leitungswasser, aus einem Reservoir W anzusaugen und mit einem hohen Wasserdruck von z.B. 120 bar zur Düse D zu fördern. Eine Auffangwanne für das von der Düse D abgegebene Wasser und ein wieder zum Reservoir führender Rücklauf für dieses Wasser sind hier nicht gezeigt.

Während das Brillenglas L mit seiner ersten optisch wirksamen Fläche cx mittels des Blockmaterials M am Blockstück S aufgeblockt ist, wie unter Bezugnahme auf die Fig. 5 noch näher erläutert wird, liegt der zweiten optisch wirksamen Fläche cc des aufgeblockten Brillenglases L in der Abblockvorrichtung 10 eine Saugeinrichtung 50 gegenüber. Die Saugeinrichtung 50 weist einen Saugkopf 52 mit einer umlaufenden Gummilippe auf, der mit der Werkstück-Drehachse B ausgefluchtet ist und dazu dient, das Brillenglas L beim Abblocken vom Blockstück S an der zweiten optisch wirksamen Fläche cc zu halten. In Fig. 1 ist das am Saugkopf 52 angesaugte Brillenglas L nach dem Abblocken mit gestrichelter Linie eingezeichnet.

Der Saugkopf 52 ist an einer durchgebohrten Kolbenstange 54 einer Kolben-Zylinder-Anordnung 56 befestigt, die ebenfalls auf der Grundplatte 18 montiert ist und mittels der der Saugkopf 52 in Richtung der Werkstück-Drehachse B bewegbar ist (Linearbewegung Y'), d.h. in Fig. 1 wahlweise nach links oder nach rechts. Hierfür ist an der Kolbenstange 54 ein in Fig. 1 gestrichelt dargestellter Kolben 58 angebracht, der zweiseitig, d.h. von links und rechts pneumatisch beaufschlagbar ist, und zwar über entsprechende Druckluftanschlüsse 60 der Kolben-Zylinder-Anordnung 56. Am in Fig. 1 rechten, vom Saugkopf 52 abgewandten Ende der Kolbenstange 54 ist ein Vakuumanschluss 62 vorgesehen, über den der Saugkopf 52 evakuiert werden kann. Es ist ersichtlich, dass mittels der Kolben-Zylinder-Anordnung 56 über den beim Abblocken an der zweiten optisch wirksamen Fläche cc angesaugten Saugkopf 52 eine vorbestimmte Zugkraft am Brillenglas L aufgebracht werden kann.

Bevor anhand der Fig. 5 insbesondere die geometrische Beziehung zwischen Düse D und Blockstück S in der Abblockvorrichtung 10 und die Funktion der Abblockvorrichtung 10 für das erste und das zweite Ausführungsbeispiel gemeinsam noch näher beschrieben werden sollen, soll zunächst noch erläutert werden, worin sich die in den Fig. 3 und 4 gezeigte Abblockvorrichtung 10 gemäß dem zweiten Ausführungsbeispiel von der vorstehend anhand der Fig. 1 und 2 beschriebenen Abblockvorrichtung 10 gemäß dem ersten Ausführungsbeispiel unterscheidet.

Der wesentliche Unterschied besteht hier darin, dass bei dem in den Fig. 3 und 4 dargestellten zweiten Ausführungsbeispiel die Abblockvorrichtung 10 noch eine dritte Bewegungseinrichtung 64 zum Erzeugen einer lagegeregelten (X-Achse) Relativbewegung zwischen dem Brillenglas L und der Düse D in einer Richtung im Wesentlichen senkrecht zur Werkstück-Drehachse B besitzt, die dazu dient, einen lichten Abstand $a_d$ (siehe wiederum Fig. 5) zwischen der Düse D, genauer deren Ausgang und der vorbestimmten Auftreffstelle MAP des Hochdruck-Wasserstrahls HDS definiert einzustellen.

Auch die dritte Bewegungseinrichtung 64 weist eine Konsole 66 auf, die an der Grundplatte 18 befestigt ist. Ein X-Schlitten 68 (Düsenschlitten) der dritten Bewegungseinrichtung 64 ist an der Konsole 66 über zwei parallel angeordnete, in Höhenrichtung in Fig. 4 voneinander beabstandete Linearführungen 70 längsverschieblich gehalten. Jede Linearführung 70 besteht in an sich bekannter Weise aus einer Führungsschiene oder -stange an dem einen Teil (Konsole 66 oder X-Schlitten 68) und zugeordneten Führungsschuhen an dem anderen Teil. Für die Erzeugung der Linearbewegung im Wesentlichen senkrecht zur Werkstück-Drehachse B, d.h. in Richtung X weist die dritte Bewegungseinrichtung 64 einen an der Konsole 66 angeflanschten Servomotor 72 auf, der über einen Gewindetrieb 74 mit dem X-Schlitten 68 wirkverbunden ist. Unterhalb der X-Schlittens 68 (siehe Fig. 4) ist ein lineares Wegmesssystem 76 mit einem am X-Schlitten 68 befestigten Linearmaßstab 78 und einem diesem zugeordneten, an der Konsole 66 angebrachten Lesekopf 80 angeordnet. Im Ergebnis ist der X-Schlitten 68 relativ zur Konsole 66 linear bewegbzw. verstellbar, und zwar CNC-lagegeregelt in beiden Richtungen der X-Achse, unter Zuhilfenahme der vom Wegmesssystem 76 ermittelten Positionsdaten für den X-Schlitten 68. Wie schließlich die Fig. 3 und 4 zeigen, trägt der X-Schlitten 68 den Halter 42 für die Düsenbaugruppe 14.

Im oberen Teil der Fig. 5 ist nun ein noch nicht an seiner zweiten optisch wirksamen Fläche cc und noch nicht an seiner Randfläche R bearbeiteter Rohling (Blank) aus beispielsweise Kunststoff für ein Brillenglas L gezeigt, der mit seiner ersten optisch wirksamen Fläche cx mittels des Blockmaterials M auf der Blockfläche F des Blockstücks S aufgeblockt ist. Bei dem Blockmaterial M handelt es sich z.B. um eine UV-aushärtende Klebstoffmischung, wie sie in der WO 2009/003660 A1 beschrieben ist. Das hier dargestellte Blockstück S besteht ebenfalls aus einem Kunststoff und ist Gegenstand der WO 2009/106296 A1 sowie auch der DE 10 2008 051 833 A1 derselben Anmelderin, auf die an dieser Stelle hinsichtlich Struktur und Funktion des Blockstücks S verwiesen sei. Bezüglich eines geeigneten (Auf) Blockverfahrens und einer geeigneten (Auf)Blockvorrichtung ist auf die WO 2009/135689 A1 der vorliegenden Anmelderin zu verweisen.

Das Blockstück S ist im oberen Teil der Fig. 5 in einer Schnittansicht dargestellt, wobei die Schnittebene durch eine Winkelreferenzachse AX des Blockstücks S verläuft, die - entsprechend der deutschen Norm DIN 58766 - durch geeignete Aussparungen am Blockstück S definiert ist und dazu dient, das Blockstück S in einer zugeordneten Aufnahme bzw. Spannzange (hier nicht dargestellt) um die Werkstück-Drehachse B winkelmäßig zu orientieren. Das Bezugszeichen REF bezeichnet in Fig. 5 einen (Höhen)Referenzpunkt am Blockstück S, an dem die Werkstück-Drehachse B eine Ebene schneidet, welche eine ringförmige Auflagefläche AF des Blockstücks S enthält, mit der das Blockstück S an der zugeordneten Aufnahme bzw. Spannzange (hier nicht gezeigt) anliegt, um das Blockstück S in Richtung der Werkstück-Drehachse B, also höhenmäßig zu positionieren. Das Blockstück S hat bezogen auf den Referenzpunkt REF eine (minimale) Höhe e am in Fig. 5 tiefsten Punkt der Blockfläche F. Bei letzterer handelt es sich im dargestellten Ausführungsbeispiel um eine Sphäre mit einem vorbestimmten Radius r.

Im unteren Teil der Fig. 5 ist das geblockte Brillenglas L nach (geringfügiger) Bearbeitung an seiner zweiten optisch wirksamen Fläche cc und Bearbeitung an seiner Randfläche R gezeigt, und zwar sowohl im Schnitt als auch in einer zugeordneten Draufsicht. Dabei wurde das Brillenglas L gegenüber der Darstellung im oberen Teil der Fig. 5 um einen Winkel von ca. 65° gegen den Uhrzeigersinn um die Werkstück-Drehachse B gedreht, so dass die Winkelreferenzachse AX eine andere Winkellage hat.

Wie insbesondere der Draufsicht von Fig. 5 zu entnehmen ist, hat im dargestellten Beispiel das Brillenglas L infolge der Bearbeitung der Randfläche R ausgehend von einer ursprünglich kreisrunden Umfangskontur des Blanks (gestrichelt in der Draufsicht) eine hier fett ausgezogene elliptische Umfangskontur erhalten. Die so gebildete Ellipse weist eine kleine Achse n und eine große Achse d auf, von denen Letztere mit der Winkelreferenzachse AX des Blockstücks S einen (festen) Winkel GAX um die Werkstück-Drehachse B einschließt. Wie die Schnittansicht zeigt, wurde bei der Bearbeitung der Randfläche R des Brillenglases L auch das Blockstück S im Randbereich zerspant.

Dem unteren Teil der Fig. 5 ist ferner die Relativlage der Düse D bezüglich des geblockten Brillenglases L beim Abblocken des Brillenglases L vom Blockstück S zu entnehmen. Hier bezeichnen zunächst q und $\beta$ den Düsenöffnungsquerschnitt (q) an der Austrittsöffnung der Düse D bzw. den Winkel ($\beta$) der Strahlfächerung des von der Düse D abgegebenen Druckmittel-Hochdruckstrahls HDS. Der bezüglich der Strahlfächerung des Druckmittel-Hochdruckstrahls HDS im Wesentlichen mittlere Auftreffpunkt (oder Auftreffstelle) des Druckmittel-Hochdruckstrahls HDS auf dem Verbund aus Brillenglas L, Blockmaterial M und Blockstück S ist mit MAP gekennzeichnet. Der mittlere Auftreffpunkt MAP des Druckmittel-Hochdruckstrahls HDS ist in radialer Richtung von der Werkstück-Drehachse B mit dem (variablen) Ellipsenradius $r_e$ beabstandet, dessen Größe sich offensichtlich in Abhängigkeit von der Drehwinkelstellung des Brillenglases L bzw. des Blockstücks S um die Werkstück-Drehachse B ändert. Mit BAX ist der (variable) Winkel bezeichnet, den der Ellipsenradius $r_e$ am mittleren Auftreffpunkt MAP des Druckmittel-Hochdruckstrahls HDS mit der Winkelreferenzachse AX des Blockstücks S einschließt. Anders ausgedrückt ist der Ellipsenradius $r_e$ abhängig von der jeweiligen Drehstellung des Blockstücks S um die Werkstück-Drehachse B, d.h. vom jeweiligen Winkel BAX [also $r_e = f(BAX)$].

Die Relativlage von Düse D und geblocktem Brillenglas L in der Abblockvorrichtung 10 wird nun definiert durch den Anstell- bzw. Einstellwinkel $\alpha$ der Düse D, d.h. des von ihr abgegebenen Druckmittel-Hochdruckstrahls HDS bezogen auf eine Ebene senkrecht zur Werkstück-Drehachse B, den (Radial)Abstand $x_d$ der Austrittsöffnung der Düse D zum Referenzpunkt REF am Blockstück S in X-Richtung und den (Höhen)Abstand $y_d$ der Austrittsöffnung der Düse D zum Referenzpunkt REF am Blockstück S in Y-Richtung.

Der Einstellwinkel $\alpha$ der Düse D sollte fest voreingestellt zwischen 5° und 25° liegen, wobei ein kleinerer Winkel für flache Kurven (= größerer Radius r der Blockfläche F) und ein größerer Winkel für steile Kurven (= kleinerer Radius r der Blockfläche F) besser ist. Vorzugsweise beträgt der Einstellwinkel $\alpha$ der Düse D ca. 15°, was sich in den von der Anmelderin durchgeführten Versuchen als guter Kompromiss für einen üblichen Kurvenbereich herausgestellt hat.

Der radiale Abstand $x_d$ der Austrittsöffnung der Düse D zur Werkstück-Drehachse B kann fest voreingestellt sein, wie bei dem ersten Ausführungsbeispiel gemäß den Fig. 1 und 2, bei dem keine X-Achse vorgesehen ist. Sind dann z.B. Brillengläser L mit einem (maximalen) Durchmesser (d) zwischen 50 mm und 90 mm abzublocken, so wird die Düse D auf einen festen Abstand $x_d$ von vorzugsweise ca. 65 mm zur Werkstück-Drehachse B eingestellt, was in den von der Anmelderin durchgeführten Versuchen gute Ergebnisse zeigte. Grundsätzlich gilt, dass der radiale Abstand $x_d$ zur Werkstück-Drehachse B so eingestellt werden sollte, dass der lichte Abstand $a_d$ (siehe Fig. 5) zwischen der Austrittsöffnung der Düse D und dem mittleren Auftreffpunkt MAP des Druckmittel-Hochdruckstrahls HDS auf dem Verbund aus Brillenglas L, Blockmaterial M und Blockstück S zwischen 15 mm und 40 mm liegt; vorzugsweise sollte der lichte Abstand $a_d$ hier ca. 20 mm betragen.

Soll der Druckmittel-Hochdruckstrahl HDS höhenmäßig im Grenzbereich zwischen Blockstück S und Blockmaterial M am Rand des Verbunds aus Brillenglas L, Blockmaterial M und Blockstück S auftreffen, was bevorzugt wird, so lässt sich die relative Y-Lage der Düse D (Abstand $y_d$) bezüglich des Referenzpunkts REF am Blockstück S bei fester relativer X-Lage der Düse D (konstanter Abstand $x_d$) nach den folgenden Beziehungen berechnen:

$$y_d = r - \sqrt{r^2 - r_e^2} + e + \tan\alpha \cdot \left( x_d - r_e \right),$$

mit dem Ellipsenradius $r_e$ aus

$$r_e = \sqrt{\left( a \cdot \cos\left( \arctan \frac{a \cdot \sin w}{b \cdot \cos w} \right) \right)^2 + \left( b \cdot \sin\left( \arctan \frac{a \cdot \sin w}{b \cdot \cos w} \right) \right)^2},$$

wobei

$$a = \frac{d}{2}, \quad b = \frac{n}{2} \quad \text{und} \quad w = BAX - GAX.$$

Ist hingegen auch eine Verstellmöglichkeit in Richtung X vorgesehen, wie bei dem zweiten Ausführungsbeispiel gemäß den Fig. 3 und 4 mit X-Achse, so bestimmen sich die Düsenabstände $x_d$ und $y_d$ bezüglich des Referenzpunkts REF am Blockstück S mit dem Ellipsenradius $r_e$ aus der obigen Formel und dem gewünschten lichten Abstand $a_d$ von Düse D und Auftreffpunkt MAP (z.B. $a_d$ = 20 mm) nach den folgenden Beziehungen:

$$x_d = r_e + \Delta x_d,$$

wobei

$$\Delta x_d = a_d \cdot \cos\alpha,$$

und

$$y_d = r - \sqrt{r^2 - r_e^2} + e + \tan\alpha \cdot \Delta x_d.$$

Grundsätzlich ist es möglich, die relative Düsenposition ($y_d$ und ggf. $x_d$) vor dem eigentlichen Abblockvorgang (1.) für eine gegebene Winkelposition (BAX) des Brillenglases L bzw. des Blockstücks S bezüglich der Werkstück-Drehachse B nach den obigen Beziehungen zu berechnen, (2.) CNC-technisch durch Verstellen in der Y-Achse und ggf. der X-Achse anzufahren und während des eigentlichen Abblockvorgangs (3.) beizubehalten, wobei dann das Blockstück S mit dem Brillenglas L um die Werkstück-Drehachse B gedreht wird. Bevorzugt ist es allerdings, die relative Düsenposition ($y_d$ und ggf. $x_d$) während des eigentlichen Abblockvorgangs (3.') in Abhängigkeit von der jeweiligen Winkelposition (BAX) des Brillenglases L bzw. des Blockstücks S bezüglich der Werkstück-Drehachse B mit zu verändern, und zwar durch CNC-technisches Verfahren in der Y-Achse und ggf. der X-Achse während der Drehung des Brillenglases L, so dass infolge koordinierter Bewegung in den B-, Y- und ggf. X-Achsen der Druckmittel-Hochdruckstrahl HDS höhenmäßig stets im Grenzbereich zwischen Blockstück S und Blockmaterial M auftrifft [d.h.: $y_d = f(BAX)$], nach Zurücklegung des ggf. stets gleichen Wegs $a_d$ von der Austrittsöffnung der Düse D zum Auftreffpunkt MAP [ggf.: $x_d = f(BAX)$] .

Insbesondere *in puncto* Abblockgeschwindigkeit gute Ergebnisse wurden in den von der Anmelderin durchgeführten Versuchen bei Verwendung einer handelsüblichen Flachstrahldüse der Fa. Kärcher erzielt, die einen Düsenöffnungsquerschnitt q von ca. 0,45 mm und einen Strahlwinkel $\beta$ von ca. 25° hatte, bei Verwendung von untemperiertem Leitungswasser als Druckmittel, mit einem Wasserdruck zwischen 100 und 140 bar, vorzugsweise von 120 bar. Hierbei wurde die Flachstrahldüse hinsichtlich ihrer Drehwinkelorientierung um ihre Längsachse derart montiert, dass, wie in Fig. 5 unten zu sehen ist, die Auffächerung des Druckmittel-Hochdruckstrahls HDS in einer Blickrichtung parallel zur Werkstück-Drehachse B (Draufsicht in Fig. 5) vollständig ("Dreieck" mit 25° Schenkelwinkel), in einer Blickrichtung senkrecht zur Werkstück-Drehachse B (mittlere Schnittansicht in Fig. 5) indes gar nicht zu erkennen war (Strich).

Die Hauptschritte eines mit der vorbeschriebenen Abblockvorrichtung 10 (erstes oder zweites Ausführungsbeispiel) durchgeführten Abblockverfahrens für Brillengläser L können nun wie folgt zusammengefasst werden:

> (i) Einlegen eines auf einem Blockstück S geblockten Brillenglases L in die Abblockvorrichtung 10, so dass das Blockstück S von der ersten Bewegungseinrichtung (Motorspindel 12) um die Werkstück-Drehachse B drehbar gehalten wird,
>
> (ii) Berechnen einer Relativlage der Düse D bezüglich des Blockstücks S, bei der die Düse D auf die vorbestimmte Auftreffstelle MAP im Randbereich zwischen Brillenglas L und Blockstück S zielt,
>
> (iii) CNC-technisches Einstellen (Y-Achse) der berechneten Relativlage von Düse D und Blockstück S mittels der zweiten Bewegungseinrichtung 16,
>
> (iv) Einschalten des Druckmittel-Hochdruckstrahls HDS, der von der Düse D in Richtung der vorbestimmten Auftreffstelle MAP im Randbereich zwischen Brillenglas L und Blockstück S abgegeben wird, um das Brillenglas L vom Blockstück S zu trennen,
>
> (v) Ausschalten des Druckmittel-Hochdruckstrahls HDS nachdem sich das Brillenglas L vom Blockstück S getrennt hat und
>
> (vi) Entnehmen des abgeblockten Brillenglases L aus der Abblockvorrichtung 10.

Eingedenk der obigen Ausführungen zur Fig. 5 umfassen hierbei die Schritte (ii) und (iii) in beiden Ausführungsbeispielen das Berechnen bzw. CNC-technische Einstellen (Y-Achse) der Höhenposition $y_d$ der Düse D bezüglich des Referenzpunkts REF am Blockstück S, um mit der Düse D auf die vorbestimmte Auftreffstelle MAP im Randbereich zwischen Brillenglas L und Blockstück S zu zielen.

Beim zweiten Ausführungsbeispiel gemäß den Fig. 3 und 4 können die Schritte (ii) und (iii) ferner ein Berechnen bzw. ein mittels der dritten Bewegungseinrichtung 64 bewirktes CNC-technisches Einstellen (X-Achse) der Radialposition $x_d$ der Düse D bezüglich des Referenzpunkts REF am Blockstück S umfassen, um die Düse D von der vorbestimmten Auftreffstelle MAP im Randbereich zwischen Brillenglas L und Blockstück S auch in definierter Weise zu beabstanden (lichter Abstand $a_d$).

Wenn darüber hinaus das Blockstück S zumindest im Schritt (iv) mittels der ersten Bewegungseinrichtung (Motorspindel 12) auch um die Werkstück-Drehachse B gedreht wird, so ist es bevorzugt, wenn zudem im Schritt (iv) die Höhenposition $y_d$ der Düse D bezüglich des Referenzpunkts REF am Blockstück S in Abhängigkeit von der jeweiligen Winkelposition BAX des Blockstücks S wie oben beschrieben berechnet und vermittels der zweiten Bewegungseinrichtung 16 (Y-Achse) eingestellt bzw. nachgeführt wird [d.h.: $y_d = f(BAX)$], so dass der Druckmittel-Hochdruckstrahl HDS stets im Grenzbereich zwischen Blockstück S und Blockmaterial M auftrifft. Dies trifft wiederum für beide Ausführungsbeispiele zu.

Beim zweiten Ausführungsbeispiel gemäß den Fig. 3 und 4 besteht zudem die Möglichkeit, im Schritt (iv) die Radialposition $x_d$ der Düse D bezüglich des Referenzpunkts REF am Blockstück S in Abhängigkeit von der jeweiligen Winkelposition BAX des Blockstücks S zu berechnen und vermittels der dritten Bewegungseinrichtung 64 (X-Achse) einzustellen bzw. nachzuführen [also: $x_d = f(BAX)$], so dass der Druckmittel-Hochdruckstrahl HDS nach Verlassen der Düse D stets nach Zurücklegung einer im Wesentlichen konstanten Strecke (lichter Abstand $a_d$ von bevorzugt 20 mm) an der Auftreffstelle MAP im Randbereich zwischen Brillenglas L und Blockstück S auftrifft.

Mit weiteren Unterschritten ausgestaltet kann sich der gesamte Abblockvorgang in einem halbautomatischen Ablauf wie folgt darstellen: Zunächst wird an der Abblockvorrichtung 10 ein "Jobticket" oder ein am Blockstück S vorgesehener Code ("Data-Matrix"; nicht gezeigt) eingescannt, um die Bearbeitungsparameter bzw. den Blockstückzustand abzufragen, umfassend insbesondere den Radius r der Blockfläche F des jeweiligen Blockstücks S und dessen Höhe e bezogen auf den Referenzpunkt REF, zudem die Geometrieinformationen des bearbeiteten, geblockten Brillenglases L, die für die Berechnung des Ellipsenradius $r_e$ erforderlich sind, wenn das Blockstück S am Rand zerspant wurde, so dass der Rand des Blockstücks S von der ursprünglichen Kreisform mit bekanntem Durchmesser abweicht, nämlich die Ellipsenachsen d und n sowie den Winkel GAX. Dann wird das geblockte Brillenglas L in die Abblockvorrichtung 10 eingelegt, d.h. mittels des Blockstücks S an der Spannzange 36 der Motorspindel 12 gespannt.

Nach Drücken der Starttaste (nicht dargestellt) beginnt sodann eine automatische Schrittabfolge, bei der zunächst die Tür (nicht gezeigt) der Abblockvorrichtung 10 geschlossen wird. Dann fahren die Achsen Y und ggf. X in die wie oben beschrieben berechnete(n) (Start)Position(en), worauf die Kolben-Zylinder-Anordnung 56 vorfährt, d.h. den Saugkopf 52 der Saugeinrichtung 50 in Fig. 1 bzw. 3 in Richtung Y' nach links verschiebt, so dass die Gummilippe des Saugkopfs 52 an der zweiten optisch wirksamen Fläche cc des Brillenglases L zur Anlage gelangt.

In der Folge wird über den Vakuumanschluss 62 ein Unterdruck an den Saugkopf 52 angelegt, so dass sich dieser am Brillenglas L festsaugt. Hierauf wird die Kolben-Zylinder-Anordnung 56 so pneumatisch beaufschlagt, dass deren Kolben 58 bestrebt ist, den Saugkopf 52 über die Kolbenstange 54 in Fig. 1 bzw. 3 in Richtung Y' nach rechts von dem Brillenglas L wegzuziehen. Dies gelingt jedoch nicht, weil die von der Kolben-Zylinder-Anordnung 56 über den Saugkopf 52 am Brillenglas L aufgebrachte Zugkraft so eingestellt ist, dass sie geringfügig kleiner ist als die durch den Saugkopf 52 am Brillenglas L bewirkte Haltekraft. Sodann wird der Hochdruckstrahl HDS eingeschaltet, während das Brillenglas L über das Blockstück S mittels der Motorspindel 12 bevorzugt gedreht wird. Um dieser Drehung zu folgen, ist der Saugkopf 52 bezüglich der Kolbenstange 54 mit einem entsprechenden Freilauf (nicht dargestellt) ausgestattet. Wie bereits beschrieben, kann jetzt die Relativlage zwischen Blockstück S und Düse D mittels der zweiten Bewegungseinrichtung 16 und ggf. der dritten Bewegungseinrichtung 64 drehwinkelabhängig in Y bzw. X eingestellt bzw. nachgeführt werden, mit dem Ziel, den Hochdruckstrahl HDS stets zwischen Blockmaterial M und Blockstück S zu richten (Y-Achse) und hierbei die freie Strahllänge (lichter Abstand $a_d$) des Hochdruckstrahls HDS ggf. konstant zu halten (X-Achse).

Wenn sich infolge der überlagerten Einwirkung von Hochdruckstrahl HDS und Zugkraft am Brillenglas L das Brillenglas L mit dem Blockmaterial M nun vom Blockstück S trennt, so kann die Kolbenstange 54 und damit der Kolben 58 der Kolben-Zylinder-Anordnung 56 in Fig. 1 bzw. 3 wieder nach rechts verfahren. Die in Fig. 1 bzw. 3 rechte Endlage dieser Teile wird durch einen Sensor (nicht gezeigt) erfasst, der ein Signal abgibt, welches anzeigt, dass das Brillenglas L vom Blockstück S abgeblockt ist.

Sodann wird der Hochdruckstrahl HDS abgeschaltet und die Achsen (Y und ggf. X) fahren zurück auf ihre Startposition. Die Tür der Abblockvorrichtung 10 öffnet sich und Brillenglas L und Blockstück S können getrennt entnommen werden. Das noch am Brillenglas L anhaftende Blockmaterial M kann jetzt von Hand von der ersten optisch wirksamen Fläche cx des Brillenglases L abgezogen werden. Als Alternative hierzu kann aber auch ein weiterer, rotierender Hochdruckstrahl in der Abblockvorrichtung zum Einsatz kommen, der von einer eigens hierfür vorgesehenen Düse (nicht dargestellt) abgegeben wird, um das Blockmaterial vom Brillenglas "abzuschälen".

Schließlich ist noch eine Entscheidung zu treffen, ob das Blockstück S nach entsprechender Reinigung wiederverwendet werden kann oder aber entsorgt werden muss, wenn es z.B. am Rand zerspant wurde.

Es wird eine Abblockvorrichtung und ein zugehöriges Verfahren zum Abblocken von optischen Werkstücken, insbesondere Brillengläsern offenbart. Die Abblockvorrichtung umfasst eine erste Bewegungseinrichtung zum Drehen eines auf einem Blockstück geblockten Werkstücks um eine Werkstück-Drehachse, eine Düsenbaugruppe mit einer Düse für die Abgabe eines Druckmittel-Hochdruckstrahls in einer Richtung im Wesentlichen quer zur Werkstück-Drehachse auf einen Randbereich zwischen Werkstück und Blockstück sowie eine zweite Bewegungseinrichtung zum Erzeugen einer Relativbewegung zwischen dem Werkstück und der Düse entlang der Werkstück-Drehachse. Eine Besonderheit der Abblockvorrichtung besteht darin, dass vorzugsweise das Werkstück bezüglich der Düse mittels der zweiten Bewegungseinrichtung lagegeregelt (Y-Achse) entlang der Werkstück-Drehachse verschiebbar ist, so dass der Druckmittel-Hochdruckstrahl auf eine vorbestimmte Auftreffstelle im Randbereich zwischen Werkstück und Blockstück ausrichtbar ist, insbesondere um das Abblocken zu beschleunigen.

BEZUGSZEICHENLISTE

| 10 | Abblockvorrichtung |
|----|----|
| 12 | erste Bewegungseinrichtung |
| 14 | Düsenbaugruppe |
| 16 | zweite Bewegungseinrichtung |
| 18 | Grundplatte |
| 20 | Konsole |
| 22 | Y-Schlitten |
| 24 | Linearführung |
| 26 | Servomotor |
| 28 | Gewindetrieb |

| 30 | Wegmesssystem |
|----|---------------|
| 32 | Linearmaßstab |
| 34 | Lesekopf |
| 36 | Spannzange |
| 38 | Hohlwellen-Drehgeber |
| 40 | Entspannzylinder |
| 42 | Halter |
| 44 | Schwenklager |
| 46 | Rohr |
| 48 | Hochdruckschlauch |
| 50 | Saugeinrichtung |
| 52 | Saugkopf |
| 54 | Kolbenstange |
| 56 | Kolben-Zylinder-Anordnung |
| 58 | Kolben |
| 60 | Druckluftanschluss |
| 62 | Vakuumanschluss |
| 64 | dritte Bewegungseinrichtung |
| 66 | Konsole |
| 68 | X-Schlitten |
| 70 | Linearführung |
| 72 | Servomotor |
| 74 | Gewindetrieb |
| 76 | Wegmesssystem |
| 78 | Linearmaßstab |
| 80 | Lesekopf |

| $\alpha$ | Einstellwinkel der Düse bezogen auf eine Ebene senkrecht zur Werkstück-Drehachse |
|----|---------------|
| $\beta$ | Strahlfächerung der Düse |

| $a_d$ | lichter Abstand der Düse zum Auftreffpunkt des Hochdruckstrahls |
|----|---------------|
| A | Winkeleinstellachse der Düse |
| AF | Auflagefläche am Blockstück |
| AX | Winkelreferenzachse am Blockstück |
| B | Werkstück-Drehachse (winkellagegeregelt) |
| BAX | Winkel zwischen dem mittleren Auftreffpunkt des Hochdruckstrahls und der Winkelreferenzachse am Blockstück |
| cc | zweite optisch wirksame Fläche am Brillenglas |
| cx | erste optisch wirksame Fläche am Brillenglas |
| d | große Achse der Ellipse |
| D | Düse |
| e | Höhe des Blockstücks bezogen auf den Referenzpunkt am Blockstück |
| E | Elektromotor |
| F | Blockfläche am Blockstück |
| GAX | Winkel zwischen der großen Achse der Ellipse und der Winkelreferenzachse am Blockstück |
| HDS | Druckmittel-Hochdruckstrahl / Hochdruck-Wasserstrahl |
| L | Werkstück / Brillenglas |
| M | Blockmaterial |
| MAP | mittlerer Auftreffpunkt bzw. -stelle des Druckmittel-Hochdruckstrahls |
| n | kleine Achse der Ellipse |
| P | Hochdruckpumpe |
| q | Düsenöffnungsquerschnitt |
| r | Radius der Blockfläche am Blockstück |
| $r_e$ | Ellipsenradius am mittleren Auftreffpunkt des Hochdruckstrahls |
| R | Randfläche am Brillenglas |
| REF | Referenzpunkt am Blockstück |
| S | Blockstück |
| W | Reservoir für Druckmittel |
| $x_d$ | Düsenabstand zum Referenzpunkt am Blockstück in X-Richtung |

X          Linearachse Düsenschlitten (lagegeregelt)
$y_d$        Düsenabstand zum Referenzpunkt am Blockstück in Y-Richtung
Y          Linearachse Werkstückschlitten (lagegeregelt)
Y'         Linearbewegung Sauger (ungesteuert)

**Patentansprüche**

1. Vorrichtung (10) zum Abblocken von optischen Werkstücken (L), insbesondere Brillengläsern, mit

   einer ersten Bewegungseinrichtung (12) zum Drehen eines auf einem Blockstück (S) geblockten Werkstücks (L) um eine Werkstück-Drehachse (B),
   einer Düsenbaugruppe (14) mit einer Düse (D) für die Abgabe eines Druckmittel-Hochdruckstrahls (HDS) in einer Richtung im Wesentlichen quer zur Werkstück-Drehachse (B) auf einen Randbereich zwischen Werkstück (L) und Blockstück (S) und
   einer zweiten Bewegungseinrichtung (16) zum Erzeugen einer Relativbewegung zwischen dem Werkstück (L) und der Düse (D) entlang der Werkstück-Drehachse (B),
   **dadurch gekennzeichnet, dass** das Werkstück (L) bezüglich der Düse (D) oder umgekehrt die Düse bezüglich des Werkstücks mittels der zweiten Bewegungseinrichtung (16) lagegeregelt (Y-Achse) entlang der Werkstück-Drehachse (B) verschiebbar ist, so dass der Druckmittel-Hochdruckstrahl (HDS) auf eine vorbestimmte Auftreffstelle (MAP) im Randbereich zwischen Werkstück (L) und Blockstück (S) richtbar ist.

2. Vorrichtung (10) nach Anspruch 1, **dadurch gekennzeichnet, dass** es sich bei der ersten Bewegungseinrichtung um eine Motorspindel (12) handelt, die eine Spannzange (36) zur drehwinkelorientierten Aufnahme des Blockstücks (S) aufweist, wobei die Spannzange (36) mittels der Motorspindel (12) im Drehwinkel (BAX) geregelt um die Werkstück-Drehachse (B) drehend antreibbar ist.

3. Vorrichtung (10) nach Anspruch 1 oder 2, **dadurch gekennzeichnet, dass** die zweite Bewegungseinrichtung (16) einen Y-Schlitten (22) aufweist, der mittels eines Servomotors (26) und eines Gewindetriebs (28) lagegeregelt (Y-Achse) entlang der Werkstück-Drehachse (B) verschiebbar ist und die erste Bewegungseinrichtung (12) trägt.

4. Vorrichtung (10) nach einem der vorhergehenden Ansprüche, **gekennzeichnet durch** eine dritte Bewegungseinrichtung (64) zum Erzeugen einer lagegeregelten (X-Achse) Relativbewegung zwischen dem Werkstück (L) und der Düse (D) in einer Richtung im Wesentlichen senkrecht zur Werkstück-Drehachse (B), wobei mittels der dritten Bewegungseinrichtung (64) ein lichter Abstand ($a_d$) zwischen der Düse (D) und der vorbestimmten Auftreffstelle (MAP) des Druckmittel-Hochdruckstrahls (HDS) einstellbar ist.

5. Vorrichtung (10) nach Anspruch 4, **dadurch gekennzeichnet, dass** die dritte Bewegungseinrichtung (64) einen X-Schlitten (68) aufweist, der mittels eines Servomotors (72) und eines Gewindetriebs (74) lagegeregelt (X-Achse) im Wesentlichen senkrecht zur Werkstück-Drehachse (B) verschiebbar ist und die Düse (D) trägt.

6. Vorrichtung (10) nach einem der vorhergehenden Ansprüche, **dadurch gekennzeichnet, dass** ein lichter / der lichte Abstand ($a_d$) zwischen der Düse (D) und der vorbestimmten Auftreffstelle (MAP) des Druckmittel-Hochdruckstrahls (HDS) zwischen 15 mm und 40 mm liegt, vorzugsweise etwa 20 mm beträgt.

7. Vorrichtung (10) nach einem der vorhergehenden Ansprüche, **dadurch gekennzeichnet, dass** die Düse (D) an einem Schwenklager (44) der Düsenbaugruppe (14) um eine Winkeleinstellachse (A) schwenkbar gehalten ist, so dass ein Einstellwinkel ($\alpha$) der Düse (D) bezogen auf eine Ebene senkrecht zur Werkstück-Drehachse (B) justierbar ist.

8. Vorrichtung (10) nach Anspruch 7, **dadurch gekennzeichnet, dass** der Einstellwinkel ($\alpha$) der Düse (D) bezogen auf die Ebene senkrecht zur Werkstück-Drehachse (B) zwischen 5° und 25° liegt, vorzugsweise etwa 15° beträgt.

9. Vorrichtung (10) nach einem der vorhergehenden Ansprüche, **dadurch gekennzeichnet, dass** das Werkstück (L) eine erste optisch wirksame Fläche (cx) und eine zweite optisch wirksame Fläche (cc) aufweist und vor dem Abblocken mit der ersten optisch wirksamen Fläche (cx) an einer Blockfläche (F) des Blockstücks (S) aufgeblockt ist, wobei eine Saugeinrichtung (50) mit einem Saugkopf (52) vorgesehen ist, der dazu dient, das Werkstück (L) beim Abblocken vom Blockstück (S) an der zweiten optisch wirksamen Fläche (cc) zu halten.

10. Vorrichtung (10) nach Anspruch 9, **dadurch gekennzeichnet, dass** der mit der Werkstück-Drehachse (B) ausgefluchtete Saugkopf (52) durch eine Kolben-Zylinder-Anordnung (56) in Richtung der Werkstück-Drehachse (B) bewegbar ist (Linearbewegung Y'), wobei mittels der Kolben-Zylinder-Anordnung (56) über den beim Abblocken an der zweiten optisch wirksamen Fläche (cc) angesaugten Saugkopf (52) eine vorbestimmte Zugkraft am Werkstück (L) aufbringbar ist.

11. Vorrichtung (10) nach einem der vorhergehenden Ansprüche, **dadurch gekennzeichnet, dass** der von der Düse (D) beim Abblocken abgegebene Druckmittel-Hochdruckstrahl (HDS) aus untemperiertem Leitungswasser als Druckmittel gebildet ist und einen Wasserdruck zwischen 100 und 140 bar, vorzugsweise 120 bar aufweist.

12. Vorrichtung (10) nach einem der vorhergehenden Ansprüche, **dadurch gekennzeichnet, dass** es sich bei der Düse (D) um eine Flachstrahldüse handelt, mit einem Düsenöffnungsquerschnitt (q) von ca. 0,45 mm und einem Strahlwinkel ($\beta$) von etwa 25°.

13. Verfahren zum Abblocken von optischen Werkstücken (L), insbesondere Brillengläsern, unter Verwendung einer Vorrichtung (10) nach einem der vorhergehenden Ansprüche, mit den folgenden Schritten:

   (i) Einlegen eines auf einem Blockstück (S) geblockten Werkstücks (L) in die Vorrichtung (10), so dass das Blockstück (S) von der ersten Bewegungseinrichtung (12) um die Werkstück-Drehachse (B) drehbar gehalten wird,
   (ii) Berechnen einer Relativlage der Düse (D) bezüglich des Blockstücks (S), bei der die Düse (D) auf die vorbestimmte Auftreffstelle (MAP) im Randbereich zwischen Werkstück (L) und Blockstück (S) zielt,
   (iii) Einstellen (Y-Achse) der berechneten Relativlage von Düse (D) und Blockstück (S) mittels der zweiten Bewegungseinrichtung (16),
   (iv) Einschalten eines Druckmittel-Hochdruckstrahls (HDS), der von der Düse (D) in Richtung der vorbestimmten Auftreffstelle (MAP) im Randbereich zwischen Werkstück (L) und Blockstück (S) abgegeben wird, um das Werkstück (L) vom Blockstück (S) zu trennen,
   (v) Ausschalten des Druckmittel-Hochdruckstrahls (HDS) nachdem sich das Werkstück (L) vom Blockstück (S) getrennt hat und
   (vi) Entnehmen des abgeblockten Werkstücks (L) aus der Vorrichtung (10).

14. Verfahren nach Anspruch 13, wobei die Schritte (ii) und (iii) das Berechnen bzw. Einstellen (Y-Achse) einer Höhenposition ($y_d$) der Düse (D) bezüglich eines Referenzpunkts (REF) am Blockstück (S) umfassen, um mit der Düse (D) auf die vorbestimmte Auftreffstelle (MAP) im Randbereich zwischen Werkstück (L) und Blockstück (S) zu zielen.

15. Verfahren nach Anspruch 14, wobei die Schritte (ii) und (iii) ferner ein Berechnen bzw. ein mittels der dritten Bewegungseinrichtung (64) bewirktes Einstellen (X-Achse) einer Radialposition ($x_d$) der Düse (D) bezüglich des Referenzpunkts (REF) am Blockstück (S) umfassen, um die Düse (D) von der vorbestimmten Auftreffstelle (MAP) im Randbereich zwischen Werkstück (L) und Blockstück (S) in definierter Weise zu beabstanden (lichter Abstand $a_d$).

16. Verfahren nach einem der Ansprüche 13 bis 15, wobei sich zwischen dem Werkstück (L) und dem Blockstück (S) eine Schicht aus einem Blockmaterial (M) befindet und die vorbestimmte Auftreffstelle (MAP) des Druckmittel-Hochdruckstrahls (HDS) im Grenzbereich zwischen Blockstück (S) und Blockmaterial (M) liegt.

17. Verfahren nach einem der Ansprüche 13 bis 16, wobei zumindest im Schritt (iv) das Blockstück (S) mittels der ersten Bewegungseinrichtung (12) um die Werkstück-Drehachse (B) gedreht wird.

18. Verfahren nach einem der Ansprüche 13, 14, 16 und 17, wobei zudem im Schritt (iv) die Höhenposition ($y_d$) der Düse (D) bezüglich des Referenzpunkts (REF) am Blockstück (S) in Abhängigkeit von der jeweiligen Winkelposition (BAX) des Blockstücks (S) berechnet und vermittels der zweiten Bewegungseinrichtung (Y-Achse) eingestellt wird ($y_d$ = f(BAX)), so dass der Druckmittel-Hochdruckstrahl (HDS) stets im Grenzbereich zwischen Blockstück (S) und Blockmaterial (M) auftrifft.

19. Verfahren nach einem der Ansprüche 13, 15 und 17, wobei zudem im Schritt (iv) die Radialposition ($x_d$) der Düse (D) bezüglich des Referenzpunkts (REF) am Blockstück (S) in Abhängigkeit von der jeweiligen Winkelposition (BAX) des Blockstücks (S) berechnet und vermittels der dritten Bewegungseinrichtung (X-Achse) eingestellt wird ($x_d$ = f(BAX)), so dass der Druckmittel-Hochdruckstrahl (HDS) nach Verlassen der Düse (D) stets nach Zurücklegung einer im Wesentlichen konstanten Strecke (lichter Abstand $a_d$) an der Auftreffstelle (MAP) im Randbereich zwischen Werkstück (L) und Blockstück (S) auftrifft.

20. Verfahren nach einem der Ansprüche 13 bis 19, wobei wenigstens in den Schritten (iv) und (v) der Saugkopf (52) der Saugeinrichtung (50) das Werkstück (L) an der zweiten optisch wirksamen Fläche (cc) hält.

21. Verfahren nach einem der Ansprüche 13 bis 20, wobei im Schritt (iv) die Kolben-Zylinder-Anordnung (56) über den Saugkopf (52) der Saugeinrichtung (50) am Werkstück (L) eine Zugkraft aufbringt, die nur geringfügig kleiner ist als die durch den Saugkopf (52) am Werkstück (L) bewirkte Haltekraft.

## Claims

1. Device (10) for deblocking optical workpieces (L), particularly spectacle lenses, comprising

   a first movement device (12) for rotating a workpiece (L), which is blocked on a block piece (S), about an axis (B) of rotation of the workpiece,
   a nozzle subassembly (14) with a nozzle (D) for delivery of a high-pressure jet (HDS) of pressure medium in a direction substantially transverse to the axis (B) of rotation of the workpiece onto an edge region between workpiece (L) and block piece (S) and
   a second movement device (16) for producing a relative movement between the workpiece (L) and the nozzle (D) along the axis (B) of rotation of the workpiece,
   **characterized in that** the workpiece (L) is displaceable with respect to the nozzle (D) or conversely the nozzle is displaceable with respect to the workpiece by means of the second movement device (16) along the axis (B) of rotation of the workpiece with positional regulation (Y-axis) so that the high-pressure jet (HDS) of pressure medium can be oriented to a predetermined place (MAP) of incidence in the edge region between workpiece (L) and block piece (S).

2. Device (10) according to claim 1, **characterized in that** the first movement device is a motor spindle (12) having a collet chuck (36) for reception, with orientation with respect to rotational angle, of the block piece (S), wherein the collet chuck (36) is rotatably drivable about the axis (B) of rotation of the workpiece by means of the motor spindle (12) with regulation of rotational angle (BAX).

3. Device (10) according to claim 1 or 2, **characterized in that** the second movement device (16) comprises a Y-carriage (22) which is displaceable by means of a servomotor (26) and a threaded drive (28) along the axis (B) of rotation of the workpiece with positional regulation (Y-axis) and which carries the first movement device (12).

4. Device (10) according to any one of the preceding claims, **characterized by** a third movement device (64) for generating a positionally regulated (X-axis) relative movement between the workpiece (L) and the nozzle (D) in a direction substantially perpendicular to the axis (B) of rotation of the workpiece, wherein a clear spacing ($a_d$) between the nozzle (D) and the predetermined place (MAP) of incidence of the high-pressure jet (HDS) of pressure medium is settable by means of the third movement device (64).

5. Device (10) according to claim 4, **characterized in that** the third movement device (64) comprises an X-carriage (68) which is displaceable by means of a servomotor (72) and a threaded drive (74) substantially perpendicularly to the axis (B) of rotation of the workpiece with positional regulation (X-axis) and which carries the nozzle (D).

6. Device (10) according to any one of the preceding claims, **characterized in that** a or the clear spacing ($a_d$) between the nozzle (D) and the predetermined place (MAP) of incidence of the high-pressure jet (HDS) of pressure medium is between 15 millimeters and 40 millimeters, preferably approximately 20 millimeters.

7. Device (10) according to any one of the preceding claims, **characterized in that** the nozzle (D) is mounted on a pivot bearing (44) of the nozzle subassembly (14) to be pivotable about an angle setting axis (A) so that a setting angle ($\alpha$) of the nozzle (D) with respect to a plane perpendicular to the axis (B) of rotation of the workpiece is adjustable.

8. Device (10) according to claim 7, **characterized in that** the setting angle ($\alpha$) of the nozzle (D) with respect to the plane perpendicular to the axis (B) of rotation of the workpiece is between 5° and 25°, preferably approximately 15°.

9. Device (10) according to any one of the preceding claims, **characterized in that** the workpiece (L) has a first optically effective surface (cx) and a second optically effective surface (cc) and prior to the deblocking is blocked by the first optically effective surface (cx) on a blocking surface (F) of the block piece (S), wherein a suction device (50) with a suction head (52) is provided, which serves the purpose of holding the workpiece (L) at the second optically effective surface (cc) during deblocking from the block piece (S).

10. Device (10) according to claim 9, **characterized in that** the suction head (52) aligned with the axis (B) of rotation of the workpiece is movable by a piston-cylinder arrangement (56) in the direction of the axis (B) of rotation of the workpiece (linear movement Y'), wherein a predetermined pulling force can be applied to the workpiece (L) by means of the piston-cylinder arrangement (56) via the suction head (52) sucking the second optically effective surface (cc) during the deblocking.

11. Device (10) according to any one of the preceding claims, **characterized in that** the high-pressure jet (HDS) of pressure medium issued by the nozzle (D) during deblocking is formed from non-temperature-controlled tap water as pressure medium and has a water pressure between 100 and 140 bars, preferably 120 bars.

12. Device (10) according to any one of the preceding claims, **characterized in that** the nozzle (D) is a fan nozzle with a nozzle opening cross-section (q) of approximately 0.45 millimeters and a jet angle ($\beta$) of approximately 25°.

13. Method of deblocking optical workpieces (L), particularly spectacle lenses, with use of a device (10) according to any one of the preceding claims, comprising the following steps:

(i) placing a workpiece (L), which is blocked on the block piece (S), in the device (10) so that the block piece (S) is mounted to be rotatable by the first movement device (12) about the axis (B) of rotation of the workpiece,
(ii) calculating a relative position of the nozzle (D) with respect to the block piece (S), in which the nozzle (D) is aimed at the predetermined place (MAP) of incidence in the edge region between workpiece (L) and block piece (S),
(iii) setting (Y-axis) the calculated relative position of nozzle (D) and block piece (S) by means of the second movement device (16),
(iv) switching on a high-pressure jet (HDS) of pressure medium which is issued by the nozzle (D) in the direction of the predetermined place (MAP) of incidence in the edge region between workpiece (L) and block piece (S) in order to separate the workpiece (L) from the block piece (S),
(v) switching off the high-pressure jet (HDS) of pressure medium after the workpiece (L) has separated from the block piece (S) and
(vi) removing the deblocked workpiece (L) from the device (10) .

14. Method according to claim 13, wherein the steps (ii) and (iii) comprise calculation and setting (Y-axis) of a height position ($y_d$) of the nozzle (D) with respect to a reference point (REF) at the block piece (S) in order to aim with the nozzle (D) at the predetermined place (MAP) of incidence in the edge region between workpiece (L) and block piece (S).

15. Method according to claim 14, wherein the steps (ii) and (iii) further comprise calculation and setting (X-axis) carried out by means of the third movement device (64) of a radial position ($x_d$) of the nozzle (D) with respect to the reference point (REF) at the block piece (S) in order to space the nozzle (D) in defined manner from the predetermined place (MAP) of incidence in the edge region between workpiece (L) and block piece (S) (clear spacing $a_d$).

16. Method according to any one of claims 13 to 15, wherein a layer of blocking material (M) is disposed between the workpiece (L) and the block piece (S) and the predetermined place (MAP) of incidence of the high-pressure jet (HDS) of pressure medium lies in the boundary region between block piece (S) and blocking material (M).

17. Method according to any one of claims 13 to 16, wherein at least in the step (iv) the block piece (S) is rotated by means of the first movement device (12) about the axis (B) of rotation of the workpiece.

18. Method according to any one of claims 13, 14, 16 and 17, wherein in addition in step (iv) the height position ($y_d$) of the nozzle (D) with respect to the reference point (REF) at the block piece (S) is calculated in dependence on the respective angular position (BAX) of the block piece (S) and set ($y_d$ = f(BAX)) by means of the second movement device (Y-axis) so that the high-pressure jet (HDS) of pressure medium is always incident in the boundary region between block piece (S) and blocking material (M).

**19.** Method according to any one of claims 13, 15 and 17, wherein in addition in step (iv) the radial position ($x_d$) of the nozzle (D) with respect to the reference point (REF) at the block piece (S) is calculated in dependence on the respective angular position (BAX) of the block piece (S) and is set ($x_d$ = f(BAX)) by means of the third movement device (X-axis) so that the high-pressure jet (HDS) of pressure medium after departure from the nozzle (D) is always incident at the place (MAP) of incidence in the edge region between workpiece (L) and block piece (S) after covering a substantially constant path (clear spacing $a_d$).

**20.** Method according to any one of claims 13 to 19, wherein at least in steps (iv) and (v) the suction head (52) of the suction device (50) holds the workpiece (L) at the second optically effective surface (cc).

**21.** Method according to any one of claims 13 to 20, wherein in step (iv) the piston-cylinder arrangement (56) applies to the workpiece (L) by way of the suction head (52) of the suction device (50) a pulling force which is only slightly smaller than the retaining force produced at the workpiece (L) by the suction head (52).

## Revendications

**1.** Dispositif (10) de glantage de pièces optiques (L), en particulier de verres de lunettes, comprenant

un premier système de déplacement (12) destiné à amener en rotation une pièce (L) bloquée sur une molette de glantage (S) autour d'un axe de rotation de pièce (B),
un module de buse (14) pourvu d'une buse (D) pour la distribution d'un jet haute pression de fluide sous pression (HDS) dans une direction sensiblement transversale à l'axe de rotation de pièce (B) sur une zone marginale entre la pièce (L) et la molette de glantage (S) et
un deuxième système de déplacement (16) destiné à produire un mouvement relatif entre la pièce (L) et la buse (D) le long de l'axe de rotation de pièce (B),
**caractérisé en ce que** la pièce (L) peut coulisser par rapport à la buse (D) ou inversement la buse peut coulisser par rapport à la pièce au moyen du deuxième système de déplacement (16) de manière réglée en position (axe Y) le long de l'axe de rotation de pièce (B), de sorte que le jet haute pression de fluide sous pression (HDS) peut être dirigé sur un point d'impact (MAP) prédéfini dans la zone marginale entre la pièce (L) et la molette de réglage (S).

**2.** Dispositif (10) selon la revendication 1, **caractérisé en ce que** le premier système de déplacement est une électrobroche (12), qui présente une pince de serrage (36) pour le logement, orienté selon un angle de rotation de la molette de glantage (S), dans lequel la pince de serrage (36) peut être entraînée en rotation au moyen de l'électrobroche (12) de manière réglée dans l'angle de rotation (BAX) autour de l'axe de rotation de pièce (B).

**3.** Dispositif (10) selon la revendication 1 ou 2, **caractérisé en ce que** le deuxième système de déplacement (16) comprend un coulisseau Y (22), qui peut coulisser au moyen d'un servomoteur (26) et d'un mécanisme fileté (28) de manière réglée en position (axe Y) le long de l'axe de rotation de pièce (B) et qui porte le premier système de déplacement (12).

**4.** Dispositif (10) selon l'une quelconque des revendications précédentes, **caractérisé par** un troisième système de déplacement (64) destiné à générer un mouvement relatif réglé en position (axe X) entre la pièce (L) et la buse (D) dans une direction sensiblement perpendiculaire à l'axe de rotation de pièce (B), dans lequel un écart intérieur ($a_d$) entre la buse (D) et le point d'impact (MAP) prédéfini du jet haute pression de fluide sous pression (HDS) peut être réglé au moyen du troisième système de déplacement (64).

**5.** Dispositif (10) selon la revendication 4, **caractérisé en ce que** le troisième système de déplacement (64) comporte un coulisseau X (68), qui peut coulisser au moyen d'un servomoteur (72) et d'un mécanisme fileté (74) de manière réglée en position (axe X) sensiblement perpendiculairement à l'axe de rotation de pièce (B) et qui porte la buse (D).

**6.** Dispositif (10) selon l'une quelconque des revendications précédentes, **caractérisé en ce qu'**un écart intérieur/l'écart intérieur ($a_d$) entre la buse (D) et le point d'impact (MAP) prédéfini du jet haute pression de fluide sous pression (HDS) est compris entre 15 mm et 40 mm, atteint de préférence sensiblement 20 mm.

**7.** Dispositif (10) selon l'une quelconque des revendications précédentes, **caractérisé en ce que** la buse (D) est retenue sur un palier pivotant (44) du module de buse (14) de manière à pouvoir pivoter autour d'un axe de réglage angulaire (A), de sorte qu'un angle de réglage ($\alpha$) de la buse (D) peut être ajusté par rapport à un plan perpendiculairement à l'axe de rotation de pièce (B).

**8.** Dispositif (10) selon la revendication 7, **caractérisé en ce que** l'angle de réglage ($\alpha$) de la buse (D) par rapport au plan perpendiculairement à l'axe de rotation de pièce (B) est compris entre 5° et 25°, atteint de préférence sensiblement 15°.

**9.** Dispositif (10) selon l'une quelconque des revendications précédentes, **caractérisé en ce que** la pièce (L) présente une première surface à effet optique (cx) et une deuxième surface à effet optique (cc) et est bloquée par la première surface à effet optique (cx) sur une surface de glantage (F) de la molette de glantage (S) avant le glantage, dans lequel un dispositif d'aspiration (50) est pourvu d'une tête d'aspiration (52), qui sert à retenir la pièce (L) sur la deuxième surface à effet optique (cc) lors du glantage par la molette de glantage (S).

**10.** Dispositif (10) selon la revendication 9, **caractérisé en ce que** la tête d'aspiration (52) alignée sur l'axe de rotation de pièce (B) peut être déplacée par un ensemble piston-cylindre (56) en direction de l'axe de rotation de pièce (B) (mouvement linéaire Y'), dans lequel une force de traction prédéfinie peut être appliquée sur la pièce (L) au moyen de l'ensemble piston-cylindre (56) par l'intermédiaire de la tête d'aspiration (52) aspirée sur la deuxième surface à effet optique (cc) lors du glantage.

**11.** Dispositif (10) selon l'une quelconque des revendications précédentes, **caractérisé en ce que** le jet haute pression de fluide sous pression (HDS) distribué par la buse (D) lors du glantage est formé d'eau du robinet non tempérée comme fluide sous pression et présente une pression d'eau comprise entre 100 et 140 bar, de préférence de 120 bar.

**12.** Dispositif (10) selon l'une quelconque des revendications précédentes, **caractérisé en ce que** la buse (D) est une buse à jet plat, présentant une section d'ouverture de buse (q) d'environ 0,45 mm et un angle de jet ($\beta$) de sensiblement 25°.

**13.** Procédé de glantage de pièces optiques (L), en particulier de verres de lunettes, faisant appel à un dispositif (10) selon l'une quelconque des revendications précédentes, comprenant les étapes suivantes :

(i) l'insertion d'une pièce (L) bloquée sur une molette de glantage (S) dans le dispositif (10), de sorte que la molette de glantage (S) est retenue de manière à pouvoir être amenée en rotation autour de l'axe de rotation de pièce (B) par le premier système de déplacement (12),
(ii) le calcul d'une position relative de la buse (D) par rapport à la molette de glantage (S), pour laquelle la buse (D) vise le point d'impact (MAP) prédéfini dans la zone marginale entre la pièce (L) et la molette de glantage (S),
(iii) le réglage (axe Y) de la position relative calculée de la buse (D) et de la molette de glantage (S) au moyen du deuxième système de déplacement (16),
(iv) l'activation d'un jet haute pression de fluide sous pression (HDS), qui est distribué par la buse (D) en direction du point d'impact (MAP) prédéfini dans la zone marginale entre la pièce (L) et la molette de glantage (S), afin de séparer la pièce (L) de la molette de glantage (S),
(v) la désactivation du jet haute pression de fluide sous pression (HDS) une fois la pièce (L) séparée de la molette de glantage (S) et
(vi) le retrait de la pièce (L) glantée du dispositif (10) .

**14.** Procédé selon la revendication 13, dans lequel les étapes (ii) et (iii) comportent le calcul ou le réglage (axe Y) d'une position en hauteur ($y_d$) de la buse (D) par rapport à un point de référence (REF) sur la molette de glantage (S), afin de cibler avec la buse (D) le point d'impact (MAP) prédéfini dans la zone marginale entre la pièce (L) et la molette de glantage (S).

**15.** Procédé selon la revendication 14, dans lequel les étapes (ii) et (iii) comportent en outre un calcul ou un réglage (axe X) provoqué au moyen du troisième système de déplacement (64) d'une position radiale ($x_d$) de la buse (D) par rapport au point de référence (REF) sur la molette de glantage (S), afin d'écarter la buse (D) du point d'impact (MAP) prédéfini dans la zone marginale entre la pièce (L) et la molette de glantage (S) d'une manière définie (écart intérieur $a_d$).

**16.** Procédé selon l'une quelconque des revendications 13 à 15, dans lequel une couche faite d'un matériau de glantage (M) se situe entre la pièce (L) et la molette de glantage (S) et le point d'impact (MAP) prédéfini du jet haute pression de fluide sous pression (HDS) se situe dans la zone limite entre la molette de glantage (S) et le matériau de glantage (M).

17. Procédé selon l'une quelconque des revendications 13 à 16, dans lequel au moins à l'étape (iv), la molette de glantage (S) est amenée en rotation autour de l'axe de rotation de pièce (B) au moyen du premier système de déplacement (12).

18. Procédé selon l'une quelconque des revendications 13, 14, 16 et 17, dans lequel en outre à l'étape (iv), la position en hauteur ($y_d$) de la buse (D) par rapport au point de référence (REF) sur la molette de glantage (S) est calculée en fonction de la position angulaire (BAX) respective de la molette de glantage (S) et réglée au moyen du deuxième système de déplacement (axe Y) ($y_d = f(BAX)$), de sorte que le jet haute pression de fluide sous pression (HDS) est constamment incident dans la zone limite entre la molette de glantage (S) et le matériau de glantage (M).

19. Procédé selon l'une quelconque des revendications 13, 15 et 17, dans lequel en outre à l'étape (iv), la position radiale ($x_d$) de la buse (D) par rapport au point de référence (REF) sur la molette de glantage (S) est calculée en fonction de la position angulaire (BAX) respective de la molette de glantage (S) et réglée au moyen du troisième système de déplacement (axe X) ($x_d = f(BAX)$), de sorte que le jet haute pression de fluide sous pression (HDS), après avoir quitté la buse (D), est constamment incident après avoir parcouru une distance sensiblement constante (écart intérieur $a_d$) au point d'impact (MAP) dans la zone marginale entre la pièce (L) et la molette de glantage (S).

20. Procédé selon l'une quelconque des revendications 13 à 19, dans lequel au moins aux étapes (iv) et (v), la tête d'aspiration (52) du système d'aspiration (50) retient la pièce (L) sur la deuxième surface à effet optique (cc).

21. Procédé selon l'une quelconque des revendications 13 à 20, dans lequel à l'étape (iv), l'ensemble piston-cylindre (56) applique sur la pièce (L), par l'intermédiaire de la tête d'aspiration (52) du système d'aspiration (50), une force de traction qui est légèrement inférieure à la force de retenue provoquée par la tête d'aspiration (52) sur la pièce (L).

**FIG. 1**

**FIG. 2**

**FIG. 3**

**FIG. 4**

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005038063 A1
- WO 03018253 A1
- WO 2008003805 A1
- DE 102008051833 A1
- WO 2009003660 A1
- WO 2009106296 A1
- WO 2009135689 A1